# EUROPÄISCHE PATENTSCHRIFT

(11) **EP 0 867 704 B1**
(45) Veröffentlichungstag und Bekanntmachung des Hinweises auf die Patenterteilung: **02.05.2003**
(21) Anmeldenummer: 98890028.8
(22) Anmeldetag: 11.02.1998
(51) Int. Cl.: G01L 9/00, G01L 23/24

(54) **Sensor zur Messung des Innendruckes von Einspritzleitungen**
Sensor for measuring the internal pressure of injection tubes
Capteur de mesure de la pression interne des tubes d'injection

(30) Priorität: 07.03.1997 AT 14697
(43) Veröffentlichungstag der Anmeldung: 30.09.1998
(73) Patentinhaber: AVL List GmbH, 8020 Graz (AT)
(72) Erfinder: Harms, Klaus-Christoph, Dr., 8051 Graz (AT); Kirschbaum, Paul, 8054 Seiersberg (AT); Glaser, Josef, Dr., 8047 Graz (AT)
(74) Vertreter: Pinter, Rudolf, Dipl.-Ing.

(56) Entgegenhaltungen:
- DE-A- 3 439 004
- DE-A- 4 020 790
- US-A- 2 305 994
- US-A- 4 731 556

## Beschreibung

Die Erfindung betrifft einen Sensor zur Messung des Innendruckes von Einspritzleitungen von Dieselbrennkraftmaschinen, mit einem Gehäuse mit zumindest zwei gelenkig verbundenen Gehäuseteilen, welches bei zumindest teilweise aufgeklappten Gehäuseteilen auf die Einspritzleitung aufsetzbar ist, diesen im aufgesetzten Zustand nach dem Schließen einer an den Gehäuseteilen angreifenden Spannvorrichtung zumindest teilweise umschließt und sich dabei bereichsweise auf seiner Oberfläche abstützt, und welches zumindest ein bei geschlossener Spannvorrichtung elastisch an die Oberfläche der Einspritzleitung angedrücktes, elektrisches Meßelement enthält.

Verwendet werden derartige Sensoren vor allem z.B. zur Prüfung und Diagnose von Dieselmotoren mit konventionellem Einspritzsystem. Diese Brennkraftmaschinen besitzen häufig keine elektrischen Einrichtungen, mit denen eine einfache und rasche Bestimmung z.B. der Drehzahl, des Förderbeginns und des für die Erkennung von Fehlern im Einspritzsystem, die häufig unzulässig schlechte Abgaswerte zur Folge haben, wichtigen Einspritzdruckverlaufes möglich wäre. Daher besteht ein Bedarf an preiswerten, robusten und ausreichend genauen Sensoren, die einfach und rasch an der Brennkraftmaschine angebracht werden können und solche Messungen erlauben.

Für diese Aufgabe prinzipiell geeignete Sensoren mit unterschiedlichen Merkmalen sind beispielsweise aus den folgenden Patentschriften bekannt geworden: AT-PS 375.466, AT-PS 353.507, AT-PS 373.393, AT-PS 373.394, AT-PS 374.007, AT-PS 374.280. Weiters ist beispielsweise die DE 40 02 790 C2 bekanntgeworden, die auch Bezug auf einige der oben genannten Schriften nimmt.

Allen diesen bekannten Sensoren ist gemeinsam, daß sie aufgrund ihres Aufbaus und der verwendeten Teile relativ teuer sind. Vor allem aber auch ist die Applikation dieser Sensoren mit Schwierigkeiten verbunden , da die Platzverhältnisse zum Anbringen des Sensors an der Einspritzleitung äußerst knapp sind und die bekannte Spannvorrichtung relativ groß ist und häufig zwei Hände zur Bedienung benötigt werden.

DE-A-34 39 004 beschreibt einen Sensor zur Messung des Innendruckes von Einspritzleitungen von Dieselbrennkraftmaschinen bestehend aus zwei gelenkig verbundenen Gehäuseteilen, die im aufgeklappten Zustand auf die Einspritzleitung aufsetzbar sind. Der eine Gehäuseteil ist als Basisteil ausgebildet und trägt einen Schenkel, dessen Klemmbacke mittels einer Spannvorrichtung elastisch an die Oberfläche der Einspritzleitung angedrückt werden kann. Der Basiskörper weist ferner ein elektrisches Meßelement auf, welches bei geschlossener Spannvorrichtung an die Oberfläche der Einspritzleitung angedrückt wird. Die Spannvorrichtung greift bezogen auf die Einspritzleitung von der Seite der gelenkigen Verbindung der beiden Gehäuseteile her an diese an, so daß der maulartig geöffnete Sensor von der Seite her, bedarfsweise auch mit nur einer Hand, über die Einspritzleitung geschoben werden kann.

Aufgabe der Erfindung ist es, die genannten Nachteile der bekannten Sensoren zu vermeiden und einen Sensor der eingangs genannten Art anzugeben, der einfach bedient werden kann, robust ist und der vor allem auch baubedingt trotz beibehaltener guter Meßeigenschaften preiswert ist.

Diese Aufgabe wird gemäß der vorliegenden Erfindung dadurch gelöst, daß die beiden Gehäuseteile so gestaltet sind, daß nach dem Schließen der Spannvorrichtung der Sensor die Einspritzleitung zumindest größtenteils und im wesentlichen symmetrisch umschließt.

Da die Spannvorrichtung die zwei Gehäuseteile auch im geöffneten Zustand verbindet, entfällt beim Aufklemmen des Sensors auch das Einrasten einer gelösten Verbindung der Spannvorrichtung mit dem Gehäuse. Alle Verbindungen des Sensors bleiben auch im geöffneten Zustand gefügt, was die Bedienung wesentlich erleichtert.

Nach einer bevorzugten Ausführung der Erfindung, wobei die Spannvorrichtung einen Spannhebel und eine Spannfeder aufweist, ist vorgesehen, daß der Spannhebel an der dem Gelenk gegenüberliegende Seite des einen Gehäuseteiles, die Spannfeder an der dem Gelenk gegenüberliegenden Seite des anderen Gehäuseteiles und die Spannfeder am Spannhebel gelenkig gelagert sind. Dadurch ergibt sich eine einfache aus wenigen Teilen und dauernd gefügte, klein bauende Spannvorrichtung, die leicht mit einer Hand zu bedienen ist.

Nach einer insbesondere die Fertigungskosten senkenden Ausführung der Erfindung ist vorgesehen, daß die gelenkige Lagerung des Spannhebels im einen Gehäuseteil und der Spannfeder im anderen Gehäuseteil durch in dafür vorgesehene Vertiefungen in den Gehäuseteilen eingeklipste, als Achsen fungierende Teile der Spannvorrichtung erfolgt. Dadurch entfallen etwa für die Lagerung in Bohrungen benötigte Teile und Fertigungsschritte und der Zusammenbau kann rasch und kostengünstig durchgeführt werden.

Weiters kann erfindungsgemäß vorgesehen sein, daß der Spannhebel beim Schließen in Richtung der Schließbewegung und beim Öffnen in Richtung der Öffnungsbewegung der beiden sich maulartig öffnenden, bzw. schließenden Gehäuseteile bewegt wird. Durch diese Maßnahme ergibt sich eine dem menschlichen Denken und Handeln logisch erscheinende Bedienung, die außerdem vermeidet, daß bei der Bedienung ungünstige Verdrehkräfte auf den Sensor ausgeübt werden.

Erfindungsgemäß kann bei einem Sensor mit einer zweipoligen Ableitung der Meßsignale das Gelenk zwei Teilgelenke aufweisen, deren jedes einer der beiden elektrischen Signalableitungen aus beiden Sensorhälften zugeordnet ist und die durch einen eine gute elektrische Isolation bewirkenden Luftspalt voneinander getrennt sind. Es ist bei den gegenständlichen Sensoren bekannt, Metallteile zur Ladungsableitung in die Gehäuseteile zu integrieren. Vorzugsweise geschieht das, indem diese beispielsweise in eine Spritzgußform eingelegt und mit Kunststoff umspritzt werden. Es ist beispielsweise weiters bekannt, im Gelenk die elektrische Verbindung zwischen den beiden Sensorhälften herzustellen. Wesentlich ist aber, daß bei der gegenständlichen zweipoligen Ausführung nicht nur eine, sondern zwei elektrische Verbindungen herzustellen sind und diese voneinander sehr gut elektrisch isoliert sein müssen. Insbesondere bei den bevorzugten Ausführungen mit piezoelektrischen Meßelementen muß auf eine hohe Isolation zwischen den beiden Polen geachtet werden. Das kann erfindungsgemäß erreicht werden, indem das Gelenk in zwei voneinander distanzierte Teilgelenke (für je einen Pol) unterteilt wird. Die Luft und der relativ große Oberflächenweg sichert die Isolation. Und falls beispielsweise einmal Kondenswassertröpfchen im Bereich des Gelenks auftreten, dann können diese an der Luft abtrocknen und gefährden nicht mehr die Isolation.

In einer weiteren Ausführung, mit einer zweipoligen Steckverbindung zum Anschluß eines Kabels, kann erfindungsgemäß vorgesehen sein, daß die beiden Teilgelenke als Buchsen für einen elektrischen Steckkontakt ausgeführt sind und daß ein mit dem Sensorkabel verbundener und nach Art eines Klinkensteckers ausgeführter zweipoliger Stecker einerseits die elektrische Verbindung der beiden Sensorhälften miteinander und mit dem Kabel herstellt und andererseits als Steckachse im Gelenk die im aufgeklemmten Zustand auftretenden mechanischen Kräfte aufnimmt. Als Steckachsen ausgeführte elektrische Verbindungen der Sensorhälften miteinander und mit dem Kabel sind zwar an sich bekannt, aber die spezielle Ausführung als nicht fest im Sensor angeordnete Steckachse, sondern als einsteckbarer und wieder ausziehbarer Klinkenstecker, dessen Kontaktflächen die elektrische Verbindung zu den in den Teilgelenken angeordneten Kontaktflächen der beiden Sensorhälften herstellen, ist neu und besonders vorteilhaft. Von Vorteil ist auch die relativ große Distanz zwischen den Teilgelenken, die auch eine breite Isolationszone zwischen den beiden Kontaktflächen des Klinkensteckers zuläßt und so die benötigte gute Isolation gewährleistet.

Nach einer anderen Ausführung der Erfindung ist vorgesehen, daß der Stecker eine vorstehende Arretierung nach Art eines Schnappriegels aufweist, die in den zwischen den beiden Teilgelenken befindlichen Spalt einrastet. Daraus ergeben sich die zwei wichtigen Vorteile, daß der Stecker im mechanisch unbelasteten Zustand, also wenn der Sensor nicht auf die Leitung geklemmt ist, weiterhin arretiert ist und sich nicht einfach vom Sensor lösen kann, und daß eine sektorielle Begrenzung der möglichen Verdrehung von Stecker und Kabel gegeben ist, die ein Durchrotieren und damit unzulässige Verschlingungen und Berührungen des Kabels verhindert.

Als weitere Maßnahme zur Arretierung des Steckers kann erfindungsgemäß vorgesehen sein, daß der Stecker eine an seinem Kabelanschlußteil befindliche und senkrecht zur Steckachse angeordnete plattenartige und weitgehend kreisförmige Verbreiterung aufweist, für die die Spannfeder der Spannvorrichtung im geöffneten Zustand eine Verriegelung gegen das Abziehen des Steckers darstellt. Diese Maßnahme hat sich sehr bewährt, da ein ungewolltes Lösen des Sensors vom Kabel dadurch praktisch ausgeschlossen ist. Im aufgeklemmten Zustand verhindern die Klemmkräfte auch bei den zum Teil sehr heftigen Vibrationen der Einspritzleitung, daß sich der Stecker vom Sensor lösen kann. Im geöffneten Zustand bewirkt die Spannfeder eine Verriegelung des Steckers. Und falls der Stecker gewollt abgezogen werden soll, kann der Sensor ohne Rohr und daher ohne wesentliche Klemmkräfte geschlossen werden, sodaß die Spannfeder den Stecker freigibt und dieser abgezogen werden kann. Davon abweichend könnte die plattenförmige Arretierung aber auch so ausgebildet sein, daß der Stecker nur im geschlossenen Zustand des Spannhebels und in einer bestimmten Drehstellung abgezogen werden kann.

Darüber hinaus kann in weiterer Ausgestaltung der Erfindung vorgesehen sein, daß der Stecker ein Winkelstecker ist und daß die plattenartige Verbreiterung des Steckers vorzugsweise in Richtung der fortgesetzten Kabelachse eine Aussparung aufweist, sodaß in der entsprechenden Drehposition des Steckers relativ zum Sensor keine Verriegelung durch die Spannfeder erfolgt. Das ist vorteilhaft, da einerseits beim Winkelstecker die achsialen Zugkräfte vom Kabel kein Abziehen des Steckers bewirken können. Andererseits ist durch die Aussparung sichergestellt, daß auch im Fall von kritischen Toleranzen zwischen Steckerplatte und Spannfeder, wie sie bei der Fertigung oder bei einer eventuell verbogenen Feder auftreten können, ein Abziehen des Steckers möglich ist. Dabei ist es vorteilhaft, daß die zum Abziehen des Steckers vorgesehene Drehposition des Steckers relativ zum Sensor bei der praktischen Anwendung sich vergleichsweise selten ergibt. Meistens steht die Kabelachse gewinkelt zur Sensorachse und die Spannfeder kann im geöffneten Zustand des Sensors ein ungewolltes Abziehen verhindern.

In einer besonders bevorzugten Ausführung der Erfindung ist vorgesehen, daß am Gelenk Führungselemente in Form von zueinander passenden und im wesentlichen nur die Gelenksbewegung zulassenden Vorsprüngen und Vertiefungen vorgesehen sind, die eine radiale und eine nach beiden Seiten wirksame achsiale Positionierung der beiden Gehäuseteile aufrecht halten, auch wenn der Stecker abgezogen ist. Dieses Hilfsgelenk ist von großem Vorteil, da es verhindert, daß die beiden Sensorhälften beim Gelenk auseinander fallen, wenn der Stecker abgezogen ist. Es darf ein relativ großes radiales Spiel aufweisen, da es im aufgeklemmten Zustand des Sensors praktisch keine mechanische Last zu tragen hat. Damit ergeben sich vorteilhaft eine wenig heikle und daher kostengünstige Fertigung und die Vermeidung von Schwierigkeiten mit der durch die beiden Teilgelenke gemeinsam mit dem Hilfsgelenk resultierenden Doppelpassungen. Die das Hilfsgelenk bildenden Führungselemente sind einstückig mit den Gehäuseteilen verbunden und im wesentlichen durch die Innen- und Außenflächen sowie Stirnflächen von zylindrischen Vorsprüngen und Vertiefungen nach Art von Zapfen und Bohrungen charakterisiert. Wesentlich ist auch, daß der Isolations-Luftspalt zwischen den Teilgelenken durch die Ausbildung des Hilfsgelenks nicht beeinträchtigt ist.

In weiterer Ausgestaltung der Erfindung ist vorgesehen, daß die das Hilfsgelenk darstellenden Führungselemente ausgesparte Bereiche aufweisen, die ein Fügen oder Trennen der beiden Gehäuseteile im vollständig aufgeklappten Zustand ermöglichen. Das Hilfsgelenk könnte zwar auch so gestaltet sein, daß ein Fügen beim Zusammenbau des Sensors durch Einklipsen erfolgen kann. Aber als besonders vorteilhaft hat sich herausgestellt, daß die Führungselemente des Hilfsgelenks kräftiger als bei einer Klipsverbindung gestaltet sind und zum Fügen beim Zusammenbau des Sensors Aussparungen aufweisen, die das Zusammenstecken der beiden Gehäuseteile im vollständig aufgeklappten Zustand erlauben. Bei der folgenden Verdrehung der beiden Gehäuseteile um die Gelenksachse, also beim Zusammenklappen des Sensors, fügen sich die nicht ausgesparten Teile der Führungselemente zu einem Hilfsgelenk. Natürlich muß beachtet werden, daß die Spannvorrichtung im Normalfall das vollständige Aufklappen der Sensorhälften verhindert. Aber beim Sensor-Zusammenbau kann die Montage der Spannvorrichtung nach dem Fügen des Hilfsgelenks erfolgen, und im Reparaturfall muß eben die Spannvorrichtung an mindestens einer Stelle gelöst werden um die Sensorhälften vollständig aufklappen und das Hilfsgelenk lösen zu können. Selbstverständlich muß der Stecker dabei immer abgezogen sein.

Eine bevorzugte Ausgestaltung der Erfindung soll nun anhand der Figuren beschrieben werden.
Fig. 1 zeigt eine Seitenansicht eines Ausführungsbeispiels eines erfindungsgemäßen Sensors mit Stecker und Kabelanschluß in geöffneter Stellung (a) und in geschlossener Stellung (b).
Fig. 2 zeigt verschiedene Ansichten (a bis e) der Steckverbindung und des Gelenks eines Sensors gemäß Fig. 1.
Fig. 3 zeigt verschiedene Ansichten (a bis c) des inneren Aufbaus eines Gehäuseteils eines Sensors gemäß Fig. 2.

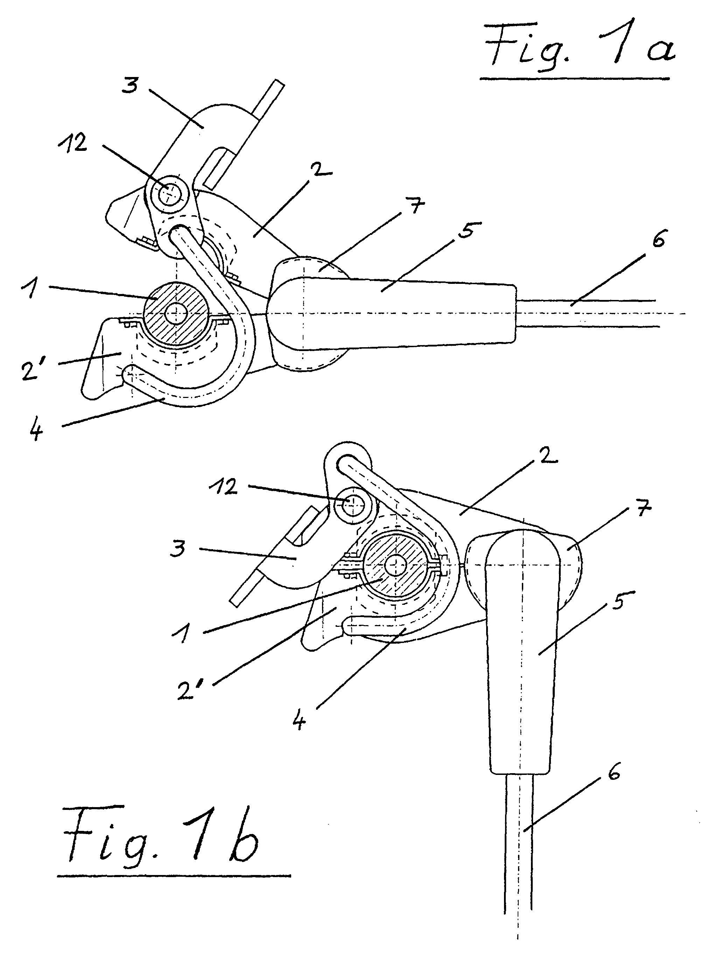

Fig. 1 zeigt deutlich die Einspritzleitung 1, den am Gehäuseteil 2 gelenkig angebrachten Spannhebel 3 und die am zweiten Gehäuseteil 2' gelenkig angebrachte Spannfeder 4, wobei die Spannvorrichtung 3, 4 in beiden gezeigten Stellungen (Fig. 1 a und b) sich im wesentlichen auf der selben Seite des Rohres 1, befindet und die beiden Gehäuseteile 2, 2' gelenkig verbindet. Der als Winkelstecker ausgeführte Stecker mit dem Kabelanschluß 5 für das Kabel 6 und mit der Arretierplatte 7 ist in das als Buchse fungierende Gelenk eingesteckt.

Man kann sich vorstellen, daß in der offenen Stellung (Fig. 1a) der Stecker mit der Arretierplatte 7 durch die Spannfeder 4 verriegelt wäre, wenn der Stecker in die in Fig. 1b gezeigten Position gedreht wäre. In der geschlossenen Stellung (Fig. 1b) hält der Stecker vor allem durch die auf ihn ausgeübten Klemmkräfte. Man erkennt auch den gleichsinnigen Drehsinn für den Gehäuseteil 2 und den Spannhebel 3 beim Öffnen und Schließen.

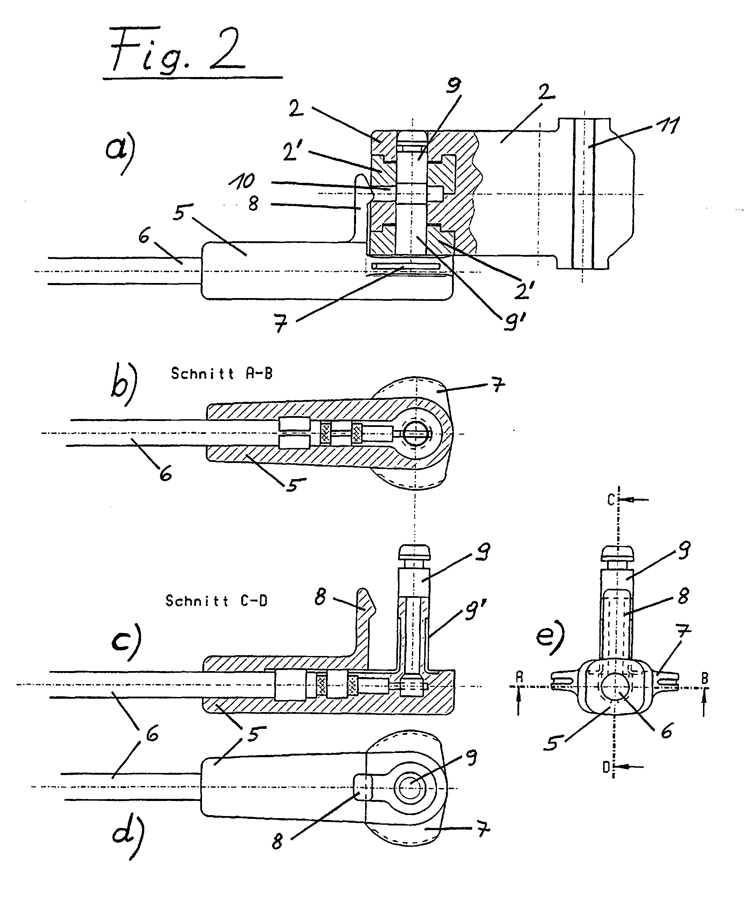

Fig. 2a zeigt den Stecker mit der im Luftspalt 10 einrastenden Schnapparretierung 8 und den als Steckachse für die beiden im Gelenk gefügten Gehäuseteile 2, 2' dienenden Klinkensteckerstift mit den beiden voneinander isolierten Kontaktzonen 9 und 9'. Man sieht weiters die beiden durch den Luftspalt 10 voneinander getrennten Teilgelenke. Die in den beiden Teilgelenken gezeigten zylindrischen Vorsprünge und Vertiefungen bilden das Hilfsgelenk und die in der Mitte des Luftspalts 10 erkennbare Führungskante an den beiden Gehäuseteilen 2, 2' dient der achsialen Positionierung, bzw. zum Aufrechterhalten des Luftspalts 10. Weiters ist gut sichtbar eine Nut 11 im Gehäuseteil 2, in die die Gelenksachse 12 des Spannhebels 3 eingeklipst wird. Entsprechend befindet sich eine Nut 11' im Gehäuseteil 2', in die der als Gelenksachse 12' dienende Teil der Spannfeder 4 eingeklipst wird, wie aber hier nicht gezeigt ist. Ebenfalls hier nicht gezeigt sind die im Gelenk enthaltenen metallischen Kontaktflächen, die als Buchse für den Klinkenstecker dienen.

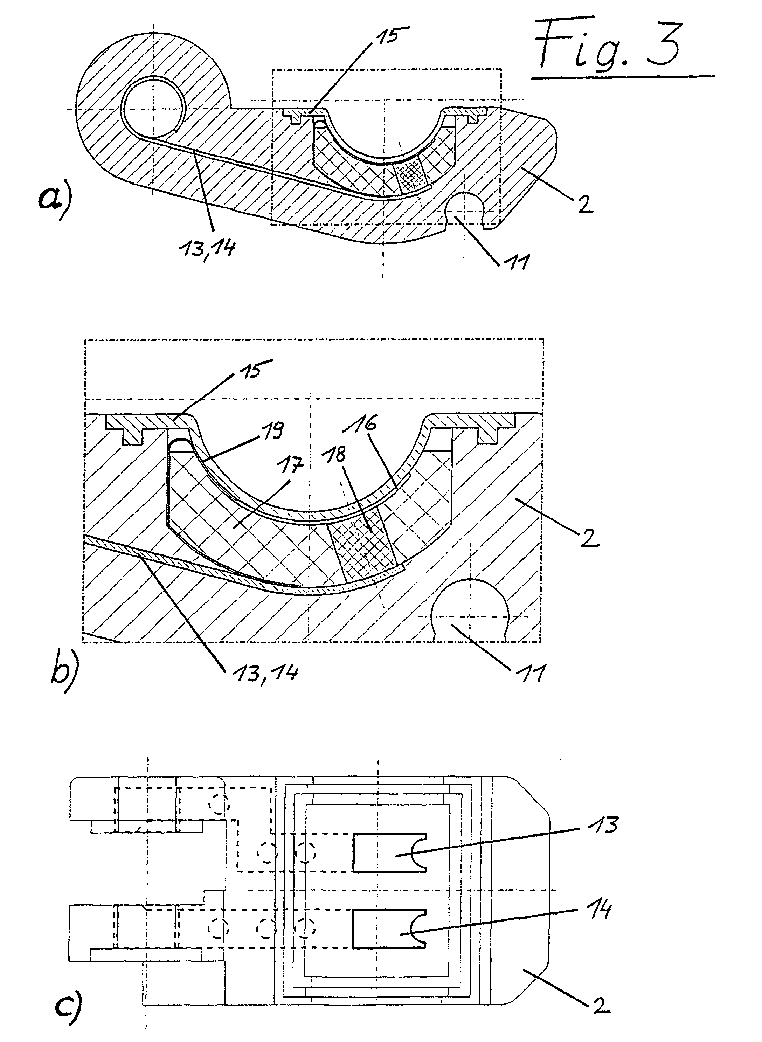

In Fig. 3 sind jedoch diese in die Gehäuseteile 2, 2' integrierten Metallteile 13 und 14 deutlich erkennbar. Geschützt durch die Schutzfolie 15 befindet sich das Meßelement 16 in Kontakt mit dem elastischen Stützelement 17. Ein elektrisch leitfähiges Elastomer 18 sowie eine dünne Metallfolie 19 leiten das elektrische Signal vom Meßelemnt zu den Kontaktzonen der beiden Metallteile 13 und 14, die das Signal polrichtig zu den in den Teilgelenken enthaltenen Kontaktflächen der Buchse für den Klinkenstecker leiten.

Es ist leicht ersichtlich, daß der dargestellte Sensor sehr einfach handzuhaben ist; insbesonders ermöglicht die Art, Ausbildung und Anordnung der Spannvorrichtung bedarfsweise auch eine einhändige Bedienung, da der Sensor mit der wie beschrieben gefügt bleibenden Spannvorrichtung einfach von der Seite her über die zu messende Einspritzleitung geschoben werden muß, wonach lediglich der Spannhebel 3 in der Darstellung gemäß Fig. 1 von der Position nach Fig. 1a in die Position nach Fig. 1b verschwenkt werden muß, was ohne weiteres beispielsweise mit dem Daumen erfolgen kann. Auch die dargestellte und beschriebenen Ausbildung des Steckers sichert und erleichtert die Bedienbarkeit bzw. Handhabbarkeit des Sensors.

## Patentansprüche

1. Sensor zur Messung des Innendruckes von Einspritzleitungen (1) von Dieselbrennkraftmaschinen, mit einem Gehäuse mit zwei gelenkig verbunden Gehäuseteilen (2, 2'), welches bei zumindest teilweise aufgeklappten Gehäuseteilen (2, 2') auf die Einspritzleitung (1) aufsetzbar ist, diese im aufgesetzten Zustand nach dem Schließen einer an den Gehäuseteilen (2, 2') angreifenden Spannvorrichtung (3, 4) zumindest größtenteils und im wesentlichen symmetrisch umschließt und sich dabei bereichsweise auf ihrer Oberfläche abstützt, und welches zumindest ein bei geschlossener Spannvorrichtung (3, 4) elastisch an die Oberfläche der Einspritzleitung (1) angedrücktes, elektrisches Messelement (16) enthält, wobei die Spannvorrichtung (3, 4) - bezogen auf die Einspritzleitung (1) - von der Seite der gelenkigen Verbindung der beiden Gehäuseteile (2, 2') her an diesen angreift und sie zusätzlich zur gelenkigen Verbindung auch im geöffneten Zustand verbindet.

2. Sensor nach Anspruch 1, wobei die Spannvorrichtung einen Spannhebel (3) und eine Spannfeder (4) aufweist, wobei der Spannhebel (3) an der dem Gelenk gegenüberliegenden Seite des einen Gehäuseteiles (2) und die Spannfeder (4) an der dem Gelenk gegenüberliegenden Seite des anderen Gehäuseteiles (2') am Spannhebel (3) gelenkig gelagert sind.

3. Sensor nach Anspruch 2, wobei die gelenkige Lagerung des Spannhebels (3) im einen Gehäuseteil (2) und der Spannfeder (4) im anderen Gehäuseteil (2') durch in dafür vorgesehene Vertiefungen (11) in den Gehäuseteilen (2, 2') eingeklipste, als Achsen fungierende Teile der Spannvorrichtung (3, 4) erfolgt.

4. Sensor nach Anspruch 2 oder 3, wobei der Spannhebel (3) beim Schließen in Richtung der Schließbewegung und beim Öffnen in Richtung der Öffnungsbewegung der beiden sich maulartig öffnenden, bzw. schließenden Gehäuseteile (2, 2') zu bewegen ist.

5. Sensor nach einem oder mehreren der vorhergehenden Ansprüche, mit einer zweipoligen Ableitung der Meßsignale, wobei das Gelenk zwei Teilgelenke aufweist, deren jedes einer der beiden elektrischen Signalableitungen aus beiden Sensorhälften zugeordnet ist und die durch einen, eine gute elektrische Isolation bewirkenden Luftspalt (10) voneinander getrennt sind.

6. Sensor nach Anspruch 5, mit einer zweipoligen Steckverbindung zum Anschluß eines Kabels (6), wobei die beiden Teilgelenke als Buchsen für einen elektrischen Steckkontakt (9, 9') ausgeführt sind und wobei ein mit dem Kabel (6) verbundener und nach Art eines Klinkensteckers ausgeführter zweipoliger Stecker (5) einerseits die elektrische Verbindung der beiden Sensorhälften miteinander und mit dem Kabel herstellt und andererseits als Steckachse im Gelenk die im aufgeklemmten Zustand auftretenden mechanischen Kräfte aufnimmt.

7. Sensor nach Anspruch 6, wobei der Stecker (5) eine vorstehende Arretierung (8) nach Art eines Schnappriegels aufweist, die in den zwischen den beiden Teilgelenken befindlichen Spalt (10) einrastet.

8. Sensor nach Anspruch 5 oder 6, wobei der Stecker (5) eine an seinem Kabelanschlußteil befindliche und senkrecht zur Steckachse angeordnete plattenartige und weitgehend kreisförmige Verbreiterung (7) aufweist, für die die Spannfeder (4) der Spannvorrichtung im geöffneten Zustand eine Verriegelung gegen das Abziehen des Steckers (5) darstellt.

9. Sensor nach Anspruch 8, wobei der Stecker (5) ein Winkelstecker ist und daß die plattenartige Verbreiterung (7) des Steckers (5), vorzugsweise in Richtung der fortgesetzten Kabelachse, eine Aussparung aufweist, sodaß in der entsprechenden Drehposition des Steckers (5) relativ zum Sensor keine Verriegelung durch die Spannfeder (4) erfolgt.

10. Sensor nach einem oder mehreren der Ansprüche 5 bis 9, wobei am Gelenk Führungselemente in Form von zueinander passenden und im wesentlichen nur die Gelenksbewegung zulassenden Vorsprüngen und Vertiefungen vorgesehen sind, die eine radiale und eine nach beiden Seiten wirksame axiale Positionierung der beiden Gehäuseteile (2, 2') aufrecht halten, auch wenn der Stecker (5) abgezogen ist.

11. Sensor nach Anspruch 10, wobei die das Hilfsgelenk darstellenden Führungselemente ausgesparte Bereiche aufweisen, die ein Fügen oder Trennen der beiden Gehäuseteile im vollständig aufgeklappten Zustand erlauben.

## Claims

1. Sensor for measuring the internal pressure of injection tubes (1) in diesel combustion engines, with a housing with two housing components (2,2') connected in an articulated manner,
which, when the housing components (2,2') are at least partially open, can be fitted onto the injection tube,
which, in the fitted condition, after a clamping device (3, 4) which engages with the housing components (2,2') has been closed, encloses the injection tube (1) at least predominantly and in a substantially symmetrical manner, and is supported, in this context, on regions of its surface,
and which contains at least one electrical measuring element (16) which is pressed in a resilient manner onto the surface of the injection tube (1) when the clamping device (3, 4) is closed,
wherein,
relative to the injection tube (1), the clamping device (3,4) engages with the two housing components (2,2') from the side of the articulated joint between the two housing components (2, 2') and connects them additionally to the articulated joint even in the open condition.

2. Sensor according to claim 1, wherein the clamping device provides a clamping lever (3) and a clamping spring (4),
wherein the clamping lever (3) is mounted in an articulated manner on the side of one housing component (2) opposing the articulated joint,
and the clamping spring (4) is mounted in an articulated manner on the side of the other housing component (2') opposing the articulated joint, and on the clamping lever (3).

3. Sensor according to claim 2, wherein the articulated mounting of the clamping lever (3) in one housing part (2) and of the clamping spring (4) in the other housing part (2') is achieved by means of parts of the clamping device (3,4) which function as axes and are clipped into indentations (11) in the housing parts (2,2') provided for this purpose.

4. Sensor according to claim 2 or 3, wherein the clamping lever (3) is moved in the direction of the closing movement when closing and in the direction of the opening movement when opening the two housing parts (2, 2') which open and/or close in the manner of a jaw.

5. Sensor according to one or more of the preceding claims with a bipolar derivation of the measuring signals, wherein the articulated joint provides two partial articulated joints, to each of which one of the two electrical signal derivations from the two sensor halves is allocated, and which are separated from one another by an air gap (10) which achieves a good electrical insulation.

6. Sensor according to claim 5, with a bipolar plug connection to the terminal of a cable (6), wherein the two partial articulated joints are designed as bushes for an electrical plug contact (9,9'), and wherein a bipolar plug (5), connected to the cable (6) and designed as a type of jack plug, on the one hand, establishes the electrical connection of the two halves of the sensor to one another and to the cable, and on the other hand, as a plug axis in the articulated joint, absorbs the mechanical forces arising in the open condition.

7. Sensor according to claim 6, wherein the plug (5) provides a projecting locating element (8) in the form of a snap-fastening pin, which engages in the gap (10) located between the two partial articulated joints.

8. Sensor according to claim 5 or 6, wherein the plug (5) provides a plate-like and largely circular widening (7) located on its cable connecting component and arranged perpendicularly to the plug axis, for which, in the open condition, the clamping spring (4) of the clamping device represents a locking mechanism to prevent the withdrawal of the plug (5).

9. Sensor according to claim 8, wherein the plug (5) is a right-angled plug, and the plate-like widening (7) of the plug (5) provides a recess, preferably in the direction of the continuing axis of the cable, so that the locking by the clamping spring (4) does not occur in the corresponding rotational position of the plug (5) relative to the sensor.

10. Sensor according to one or more of claims 5 to 9, wherein, at the articulated joint, guiding elements in the form of projections and indentations which are mutually interlocking and essentially permit only the articulated movement are provided, which maintain a radial and bilateral axial positioning of two housing parts (2, 2'), even when the plug (5) is withdrawn.

11. Sensor according to claim 10, wherein the guiding elements representing the auxiliary articulated joint provide recessed regions, which allow the joining or separation of the two housing parts in the fully open condition.

## Revendications

1. Capteur de mesure de la pression interne de tubes d'injection (1) de moteurs à carburant Diesel, avec un boîtier avec deux parties de boîtier (2, 2') raccordées par articulation qui, avec les parties de boîtier (2, 2') au moins partiellement repliées, peut être monté sur le tube d'injection (1), qui entoure celui-ci au moins en grande partie et essentiellement symétriquement, à l'état monté après la fermeture d'un dispositif de serrage (3, 4) s'enclenchant dans les parties de boîtier (2, 2'), et qui s'appuie alors sur la surface de celui-ci et qui comprend au moins un élément de mesure (16) électrique pressé de manière élastique sur la surface du tube d'injection (1), le dispositif de serrage (3, 4) étant fermé, de telle manière que le dispositif de serrage (3, 4) - par rapport au tube d'injection (1) - s'enclenche, du côté du raccordement articulé des deux parties de boîtier (2, 2'), dans celles-ci et les raccorde, en plus du raccordement articulé, également à l'état ouvert.

2. Capteur selon la revendication 1, dans lequel le dispositif de serrage comporte un levier de serrage (3) et un ressort de serrage (4), de telle manière que le levier de serrage (3) du côté de la partie de boîtier (2) opposé à l'articulation et le ressort de serrage (4) du côté de l'autre partie de boîtier (2') opposé à l'articulation sont montés sur le levier de serrage (3) par articulation.

3. Capteur selon la revendication 2, dans lequel le montage articulé du levier de serrage (3) dans une partie de boîtier (2) et du ressort de serrage (4) dans l'autre partie de boîtier (2') se fait par l'intermédiaire de parties du dispositif de serrage (3, 4) clipsées dans des cavités (11) prévues pour cela dans les parties de boîtier (2, 2'), fonctionnant comme des axes.

4. Capteur selon la revendication 2 ou 3, dans lequel le levier de serrage (3) doit être déplacé, lors de la fermeture, dans le sens du mouvement de fermeture et, lors de l'ouverture, dans le sens d'ouverture des deux parties de boîtier (2, 2') s'ouvrant ou se fermant à la manière de mâchoires.'

5. Capteur selon une ou plusieurs des revendications précédentes, avec une dérivation bipolaire des signaux de mesure, dans lequel l'articulation comporte deux articulations partielles dont chacune est associée à l'une des deux dérivations de signaux électriques provenant des deux moitiés de capteur et qui sont séparées l'une de l'autre par un intervalle (10) produisant une bonne isolation électrique.

6. Capteur selon la revendication 5, avec un connecteur à fiches bipolaire pour le raccordement d'un câble (6), dans lequel les deux articulations partielles sont configurées comme des douilles pour un contact électrique à fiches (9, 9') et dans lequel une fiche mâle bipolaire (5) raccordée au câble (6) et configurée comme une fiche mâle à cliquet, d'une part, établit le raccordement électrique entre les deux moitiés du capteur et avec le câble et, d'autre part, comme axe enfichable dans l'articulation, absorbe les forces mécaniques se produisant à l'état serré.

7. Capteur selon la revendication 6, dans lequel la fiche mâle (5) est munie d'un dispositif de blocage (8) en saillie à la manière d'un verrou à ressort qui s'encliquette dans la fente (10) se trouvant entre les deux articulations partielles.

8. Capteur selon la revendication 5 ou 6, dans lequel la fiche mâle (5) est munie d'un élargissement (7) en forme de plaque et sensiblement circulaire situé à sa partie de raccordement au câble et disposé perpendiculairement à l'axe enfichable pour lequel le ressort de rappel (4) du dispositif de serrage constitue, à l'état ouvert, un verrouillage contre l'enlèvement de la fiche mâle (5).

9. Capteur selon la revendication 8, dans lequel la fiche mâle (5) est une fiche coudée et l'élargissement en forme de plaque (7) de la fiche mâle (5) comporte, de préférence dans le sens de l'axe de câble continu, un évidement, de sorte qu'aucun verrouillage par le ressort de rappel (4) ne se produit dans la position de rotation correspondante de la fiche mâle (5) par rapport au capteur.

10. Capteur selon une ou plusieurs des revendications 5 à 9, dans lequel des éléments, qui maintiennent un positionnement radial et axial agissant des deux côtés des deux parties de boîtier (2, 2'), même lorsque la fiche mâle (5) est enlevée, sont prévus sur l'articulation, sous forme de saillies et de creux adaptés les uns aux autres et permettant essentiellement uniquement le mouvement d'articulation.

11. Capteur selon la revendication 10, dans lequel les éléments de guidage constituant l'articulation auxiliaire comportent des zones évidées qui permettent d'assembler ou de séparer les deux parties de boîtier à l'état totalement déplié.
